# EUROPÄISCHE PATENTSCHRIFT

(11) **EP 2 452 091 B1**
(45) Veröffentlichungstag und Bekanntmachung des Hinweises auf die Patenterteilung: **11.09.2013**
(21) Anmeldenummer: 10744852.4
(22) Anmeldetag: 08.07.2010
(51) Int. Cl.: F16D 3/223

(54) **KUGELGELENK**
BALL JOINT
JOINT À ROTULE

(30) Priorität: 10.07.2009 DE 102009032781
(43) Veröffentlichungstag der Anmeldung: 16.05.2012
(73) Patentinhaber: Neumayer Tekfor Holding GmbH, 77756 Hausach (DE)
(72) Erfinder: LEHMANN, Martin, 78132 Hornberg (DE)
(86) Internationale Anmeldenummer: PCT/DE2010/000796
(87) Internationale Veröffentlichungsnummer: WO 2011/003401

(56) Entgegenhaltungen:
- EP-A1- 1 669 622
- EP-A1- 1 845 274
- EP-A1- 2 149 719
- EP-A1- 2 180 202
- FR-A1- 2 512 141
- FR-A1- 2 689 947
- JP-A- 53 057 341
- US-A1- 2007 259 724

## Beschreibung

Die Erfindung bezieht sich auf ein Kugelgelenk, mit einer Innennabe, die eine Innennabenachse und eine Außenfläche aufweist, wobei in der Innennabe Innenlaufrillen und Käfigführungsflächen angeordnet sind, mit einer Außennabe, die eine Außennabenachse und eine Innenfläche aufweist, wobei in der Außennabe Außenlaufrillen und Käfigführungsflächen angeordnet sind, wobei jeweils eine Innenlaufrille einer Außenlaufrille gegenüberliegt und mit dieser jeweils ein Laufrillenpaar bildet, und mit einem Käfig, welcher im Wesentlichen ringförmig ausgestaltet ist und eine Käfigachse, eine Innenfläche, eine Außenfläche und zwei die Innenfläche und die Außenfläche begrenzende Ränder aufweist, wobei der Käfig zwischen der Innennabe und der Außennabe angeordnet ist, wobei der Käfig entsprechend der Anzahl der Laufrillenpaare Fenster aufweist, in denen in die Innenlaufrillen und Außenlaufrillen eingreifende Kugeln geführt sind. Das Gelenk dient dabei vorzugsweise der Anwendung in einem Fahrzeug.

Kugelgelenke werden im Stand der Technik beispielweise im Antriebsstrang von Fahrzeugen verwendet. Die Kugeln dienen dabei der Kraftübertragung zwischen einer Außen- und einer Innennabe. Ein Käfig hält die Kugeln in einer Ebene. Die Offenlegungsschrift DE 1 297 415 beschreibt ein Drehgelenk mit geradlinig achsparallelen Rillen zur Aufnahme der Kugeln. Die Offenlegungsschrift DE 10 2006 020 711 A1 beschreibt einen Käfig für ein Gelenk, welcher im Randbereich eine größere Wandstärke als im mittleren Bereich um die Fenster herum aufweist. Weitere Gelenke sind beispielsweise offenbart in den Dokumenten US 4,511,346, US 2003/0008716 A1 oder DE 43 17 364 B4. Eine Thematik bei Kugelgelenken ist die Führung der Kugeln in ihren Bahnen. Bei Lösungen des Standes der Technik geht dies zumeist mit höheren Kosten einher.

Der Erfindung liegt die Aufgabe zugrunde, ein Kugelgelenk vorzuschlagen, bei welchem eine Führung der Kugeln realisiert wird und welches möglichst kostenreduziert ist. Als nächstliegender Stand der Technik werden die Kugelgelenke von US-2007259724, EP1669622, FR-2512141, EP-1845274, FR-2689947 und JP-53057341 angesehen.

Die Erfindung löst die Aufgabe dadurch, dass die Innenfläche des Käfigs derartig ausgestaltet ist, dass die Innenfläche und/oder eine Einhüllende der Innenfläche sich zumindest abschnittsweise ausgehend von einem Rand in Richtung der Käfigachse annähert, dass die Außenfläche des Käfigs derartig ausgestaltet ist, dass die Außenfläche und/oder eine Einhüllende der Außenfläche sich zumindest abschnittsweise ausgehend von einem Rand von der Richtung der Käfigachse entfernt, dass mindestens eine Innenlaufrille im Wesentlichen gerade und/oder parallel zur Innennabenachse verlaufend ausgestaltet ist, und dass mindestens eine Außenlaufrille im Wesentlichen gerade und/oder parallel zur Außennabenachse verlaufend ausgestaltet ist. Das Kugelgelenk ist insbesondere ein Verschiebegelenk mit Winkelausgleichsfunktion, wie es beispielsweise für eine Antriebswelle im Fahrzeugbereich verwendet werden kann. Dabei ist die Innenfläche des Käfigs zumindest abschnittsweise nach innen bzw. die Außenfläche des Käfigs zumindest abschnittsweise nach außen geneigt. Dabei liegt der der Käfigachse nächste Bereich der Innenfläche vorzugsweise auf der Höhe der Mitte des mindestens einen Fensters. Mit anderen Worten: Der Innenraum des Käfigs wird zumindest abschnittsweise in Richtung der Mitte der Fenster und ausgehend vom Rand her enger. In einer Ausgestaltung ist die Innenfläche des Käfigs längs der Käfigachse rotationssymmetrisch ausgestaltet. Der Verlauf kann dabei stetig und glatt sein. In einer alternativen Variante verengt sich der Innenraum des Käfigs unstetig, z.B. treppenförmig. In einer weiteren Ausgestaltung ist die Innenfläche geschwungen und verengt sich damit. Hierfür dient die Einhüllende der Beschreibung, welche insbesondere die jeweils am weitesten nach innen ragenden Abschnitte der Innenfläche miteinander verbindet. Damit geht auch einher, dass sich an Abschnitte mit Schrägung in den Innenraum hinein stets auch achsparallele Abschnitte anschließen können. Somit kann beispielweise auch der Rand des Käfigs zunächst einen solchen achsparallelen Bereich aufweisen, an welchen sich ein geneigter Bereich anschließt. Der Käfig dient beispielweise der Kugelführung in einem Kleinstwinkelverschiebegelenk, also mit einem möglichen Verkippen des Gelenks um einen Winkel kleiner als 6°. In einer Ausgestaltung nähert sich die Innenfläche des Käfigs dabei ausgehend von dem Rand des Käfigs unter einem ersten Öffnungswinkel in Richtung der Käfigachse an. Der Öffnungswinkel beschreibt vorzugsweise den Winkel, um welchen die Innenfläche sich vom Rand aus in den Innenraum hineinneigt. D.h. bei einem Käfig mit einer glatten, rein hohlzylindrischen und somit nicht erfindungsgemäßen Innenfläche wäre dieser Öffnungswinkel gleich Null. Im Stand der Technik sind die Kugellaufbahnen zumeist entweder gekrümmt oder bezogen auf die Drehachse des Gelenks geneigt. Sind die Kugellaufbahnen gerade und achsparallel, so reduziert sich der fertigungstechnische Aufwand erheblich. Entscheidend ist dabei jedoch, dass die achsparallelen Kugellaufbahnen keine positionsbestimmenden Kräfte auf die Kugeln oder allgemein die Wälzkörper ausüben, so dass deren Lage undefiniert ist. Ein Käfig nach dem Stand der Technik hält die Wälzkörper zwar in einer gemeinsamen Ebene, aber ein willkürliches Verkippen kann nicht verhindert werden. Dieser Problematik begegnet insbesondere der Käfig, welcher die Bewegungsfreiheit der Kugeln entsprechend einschränkt. In einer Ausgestaltung ergibt sich somit zumindest teilweise eine im Wesentlichen rhombische Schnittfläche des Käfigs.

Die folgenden Ausgestaltungen beziehen sich auf die Innenfläche des Käfigs, so dass beispielsweise die Einhüllende auch die Ausgestaltung der Innenfläche beschreibt. Eine Ausgestaltung des Käfigs sieht vor, dass die Innenfläche und/oder die Einhüllende sich zumindest innerhalb eines sich zwischen den beiden Rändern erstreckenden Streifens ausgehend von einem Rand zumindest abschnittsweise in Richtung der Käfigachse annähert. Bei dem Streifen oder bei den Streifen handelt es sich vorzugsweise um die Abschnitte des Käfigs, in welchen sich kein Fenster befindet. Dies sind somit insbesondere die Abschnitte, welche beim Kugelgelenk Kontakt mit den Käfigführungsflächen haben. Eine Ausgestaltung beinhaltet, dass die Innenfläche des Käfigs und/oder die Einhüllende sich ausgehend von je einem Rand zumindest abschnittsweise in Richtung der Käfigachse annähert. Die Innenfläche des Käfigs ragt in dieser Ausgestaltung von beiden Rändern in den Innenraum hinein. In einer Ausgestaltung treffen sich dabei die beiden nach innen geneigten Bereiche der Innenfläche des Käfigs im Wesentlichen auf der Mitte des Käfigs bzw. auf der Höhe der Mitte der Fenster. Auch hier ist die Ausgestaltung der Innenfläche des Käfigs insbesondere rotationssymmetrisch. In einer Ausgestaltung ist die Innenfläche des Käfigs insbesondere achssymmetrisch zu einer Mittenachse des Käfigs. Eine Ausgestaltung sieht vor, dass die Innenfläche des Käfigs und/oder die Einhüllende sich zumindest innerhalb eines sich zwischen den beiden Rändern erstreckenden Streifens jeweils ausgehend von einem Rand bis zu einem gemeinsamen Bereich zumindest abschnittsweise in Richtung der Käfigachse annähert. In einer Ausgestaltung ist die gesamte Innenfläche des Käfigs derartig ausgestaltet. Die Innenfläche des Käfigs neigt sich dabei ausgehend von den beiden Rändern in den Innenraum hinein, bis sich die beiden in den Innenraum geneigten Teilinnenflächen in einem Bereich treffen. In einer Ausgestaltung handelt es sich dabei um die mittlere Höhe des Käfigs oder in einer anderen Ausgestaltung um die Höhe der Mitte der Fenster. In diesem Bereich ist dabei beispielsweise eine rotationssymmetrische Spitze oder eine Abflachung oder eine gerundete Struktur vorgesehen. Die Innenfläche ähnelt somit je nach Ausgestaltung einem V oder einem U, wobei die Spitze der Großbuchstaben V bzw. U sich in einer Ausgestaltung insbesondere auf der Höhe des Umfangs des ringförmigen Käfigs befindet, auf welchem jeweils die Mitte der Fenster liegt. Dies gilt insbesondere für den Fall, dass mehrere Fenster vorgesehen sind, welche im Wesentlichen auf einem gleichen Umfang liegen. Eine Ausgestaltung sieht vor, dass die Innenfläche des Käfigs und/oder die Einhüllende sich ausgehend von je einem Rand zumindest abschnittsweise mit einem ersten Öffnungswinkel und einem zweiten Öffnungswinkel in Richtung der Käfigachse annähert. Eine Ausgestaltung beinhaltet, dass der erste Öffnungswinkel und der zweite Öffnungswinkel der Innenfläche des Käfigs im Wesentlichen identisch sind. Eine Ausgestaltung sieht vor, dass der erste Öffnungswinkel und der zweite Öffnungswinkel unterschiedlich sind. Eine Ausgestaltung beinhaltet, dass der erste Öffnungswinkel und/oder der zweite Öffnungswinkel kleiner oder gleich 3°, vorzugsweise kleiner oder gleich 1° ist. Dies ist jeweils der Winkel gegenüber einem innen gerade ausgestalteten zylindrischen Käfig.

Die folgenden Ausgestaltungen beziehen sich auf die Außenfläche des Käfigs. Dabei ähnlichen die Varianten denen der Ausgestaltungen der Innenfläche, wobei der Unterschied in der Richtung der Fläche liegt. Eine Ausgestaltung beinhaltet, dass die Außenfläche des Käfigs und/oder die Einhüllende sich zumindest innerhalb eines sich zwischen den beiden Rändern erstreckenden Streifens ausgehend von einem Rand zumindest abschnittsweise von der Richtung der Käfigachse entfernt. Eine Ausgestaltung sieht vor, dass die Außenfläche des Käfigs und/oder die Einhüllende sich ausgehend von je von einem Rand zumindest abschnittsweise von der Richtung der Käfigachse entfernt. Eine Ausgestaltung beinhaltet, dass die Außenfläche des Käfigs und/oder die Einhüllende sich zumindest innerhalb eines sich zwischen den beiden Rändern erstreckenden Streifens jeweils ausgehend von einem Rand bis zu einem gemeinsamen Bereich zumindest abschnittsweise von der Richtung der Käfigachse entfernt. Auch für die Außenfläche gilt somit die oben bei der Innenfläche beschriebene Ausgestaltung in Bezug auf eine mögliche V- oder U-Form. In einer Ausgestaltung liegen die Bereiche, in welchen sich die jeweils geneigten Flächen der Innen- bzw. Außenseite treffen, auf der gleichen Höhe. Für die V-förmige Ausgestaltung liegen somit die jeweils vorzugsweise rotationssymmetrischen Spitzen nach innen bzw. nach außen auf dem gleichen Umfang des Käfigs. Damit geht beispielsweise in einer Ausgestaltung einher, dass der Käfig jeweils ausgehend vom Rand her in Richtung der Mitte eine zunehmende Wandstärke bzw. Dicke aufweist. Eine Ausgestaltung sieht vor, dass die Außenfläche des Käfigs und/oder die Einhüllende sich ausgehend von je einem Rand zumindest abschnittsweise mit einem ersten Öffnungswinkel und einem zweiten Öffnungswinkel von der Richtung der Käfigachse entfernt. Eine Ausgestaltung beinhaltet, dass der erste Öffnungswinkel und der zweite Öffnungswinkel der Außenfläche des Käfigs im Wesentlichen identisch sind. In einer alternativen Ausgestaltung sind der erste Öffnungswinkel und der zweite Öffnungswinkel unterschiedlich. Die Öffnungswinkel beziehen sich dabei jeweils auf die Ausgestaltung der Außenfläche. In einer Ausgestaltung sind die Öffnungswinkel der Innenfläche und der Außenfläche jeweils paarweise bezogen auf die Winkel, welche sich auf den gleichen Rand beziehen, gleich. Eine Ausgestaltung beinhaltet, dass der erste Öffnungswinkel und/oder der zweite Öffnungswinkel der Außenfläche des Käfigs und/oder der Einhüllenden der Außenfläche kleiner oder gleich 3°, vorzugsweise kleiner oder gleich 1° ist.

Eine Ausgestaltung sieht vor, dass das mindestens eine Fenster des Käfigs einen im Wesentlichen kreisförmigen Querschnitt aufweist, oder dass das mindestens eine Fenster einen im Wesentlichen ellipsenförmigen Querschnitt aufweist oder dass das mindestens eine Fenster einen im Wesentlichen rechteckigen, insbesondere mit abgerundeten Kanten versehenen, Querschnitt aufweist oder dass das mindestens eine Fenster einen zumindest abschnittsweise in Richtung der Käfigachse verengten und seitlich dazu erweiterten Querschnitt aufweist. Eine Ausgestaltung sieht vor, dass die lange Achse des im Wesentlichen ellipsenförmigen Querschnitts im Wesentlichen senkrecht zur Käfigachse liegt. Eine Ausgestaltung beinhaltet, dass n Fenster des Käfigs vorgesehen sind, wobei n eine ganze natürliche Zahl ist. In einer Ausgestaltung ist n eine gerade Zahl. Eine Ausgestaltung sieht vor, dass n ein ganzzahliges Vielfaches von vier ist. Eine Ausgestaltung beinhaltet, dass zwischen jeweils zwei Fenstern im Wesentlichen der gleiche Raumwinkel liegt. Die Fenster sind somit vorzugsweise symmetrisch angeordnet, so dass insbesondere die Streifen mit Fenstern im Wesentlichen gleiche Breite und die Streifen ohne Fenster auch im Wesentlichen gleiche Breite aufweisen. Eine Ausgestaltung sieht vor, dass der Käfig mehrteilig oder einteilig ausgestaltet ist.

Eine Ausgestaltung beinhaltet, dass das mindestens eine Fenster zur zumindest teilweisen Aufnahme mindestens einer Kugel ausgestaltet ist. In einer Ausgestaltung entspricht dabei mindestens einer der Öffnungswinkel der Innen- bzw. Außenfläche dem halben Kippwinkel des Kugelgelenks. Neigt sich somit beispielsweise das Kugelgelenk mit einem maximalen Winkel von 2° (dies ist somit der Beugewinkel des Gelenks), so beträgt mindestens ein Öffnungswinkel oder betragen sogar alle Öffnungswinkel im Wesentlichen 1°. Eine Ausgestaltung sieht vor, dass das mindestens eine Fenster und die mindestens eine Kugel derartig ausgestaltet und aufeinander abgestimmt sind, dass die mindestens eine Kugel zumindest in Richtung der Käfigachse im Wesentlichen frei von Spiel innerhalb des Fensters ist. Die Reduktion des Spiels der Kugeln in axialer Richtung verhindert ein mögliches Verklemmen der Kugeln.

Eine Ausgestaltung beinhaltet, dass es sich bei dem Kugelgelenk um ein längsverschiebliches Kugelgelenk oder um ein, insbesondere längsverschiebliches, Kugelgleichlaufdrehgelenk oder um ein Kugelgleichlauffestgelenk handelt.

Eine Ausgestaltung sieht vor, dass das Kugelgelenk einen Beugewinkel kleiner oder gleich 6°, vorzugsweise kleiner oder gleich 2° aufweist.

Die Erfindung wird anhand einiger in den Figuren dargestellter Ausführungsbeispiele näher erläutert. Dabei zeigen:
Fig. 1: eine Explosionsdarstellung eines Kugelgelenks,
Fig. 2: eine räumliche Darstellung eines Kugelkäfigs,
Fig. 3: einen vergrößerten Ausschnitt eines Schnitts durch ein Kugelgelenk, und
Fig. 4: ein Teile eines Schnitts durch einen Käfig einer weiteren Ausgestaltung.

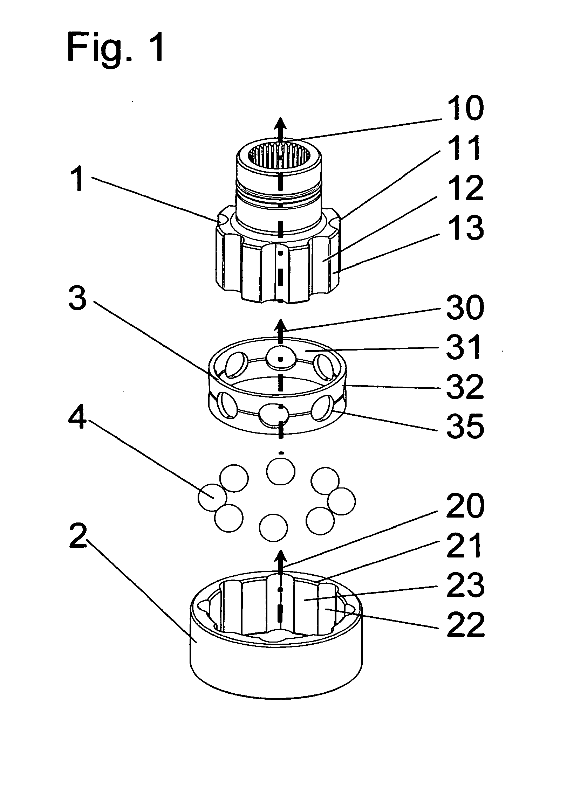

Die Fig. 1 zeigt in Explosionsdarstellung ein erfindungsgemäßes Kugelgelenk. Zu sehen ist die Außennabe 2, in deren Innenfläche 21 sich die Außenlaufrillen 22 für die Kugeln 4 befinden. Die Außenlaufrillen 22 sind hier symmetrisch in Richtung der Außennabenachse 20 in die Innenfläche 21 eingebracht und wechseln sich mit den Käfigführungsflächen 23, welche im Wesentlichen als gerade, d.h. nicht gekrümmte Zylindersegmente ausgestaltet sind, alternierend ab. In dieser Ausgestaltung sind die Außenlaufrillen 22 gerade und verlaufen insbesondere parallel zur Außennabenachse 20. Gleiches gilt für die Käfigführungsfläche 23. In die Außennabe 2, welche beispielsweise zumindest mittelbar mit einer Welle verbunden ist, werden die Kugeln 4, der Käfig 3 und die Innennabe 1 eingebracht. Die Kugeln 4 dienen der Drehmomentübertragung zwischen der Innennabe 1 und der Außennabe 2.

Die Innennabe 1 ist dabei beispielsweise zur Anbindung an eine weitere Welle oder einen weiteren Wellenabschnitt oder der Anbindung an ein Rad, ein Differenzial oder ein Getriebe ausgestaltet. Auch die Innennabe 1 verfügt in dieser Ausgestaltung über gerade Innenlaufrillen 12 in ihrer Außenfläche 11, welche ebenfalls parallel zur Innennabenachse 10 verlaufen. Die Innenlaufrillen 12 wechseln sich mit den Käfigführungsflächen 13 ab, welche auch gerade und achsparallel sind. Die Ausgestaltung der Innen- 1 und der Außennabe 2 mit geraden und achsparallelen Laufbahnen 12, 22 vereinfacht die Fertigung.

Die einzelnen Kugellaufbahnen oder Laufrillen 12, 22 liegen dabei einander im zusammengebauten Zustand gegenüber und bilden Kugelbahnpaare, in welche hier jeweils eine Kugel 4 eingebracht wird. Der Käfig 3 hält die - in dieser Ausgestaltung acht - Kugeln 4 in einer Ebene und verhindert über seine erfindungsgemäße Ausgestaltung ein Verklemmen der Kugeln 4. Der Käfig 3 selbst ist im Wesentlichen ringförmig ausgestaltet und verfügt über der Anzahl der Kugeln 4 entsprechend viele Fenster 35. Zu sehen sind die Innen-31 und die Außenfläche 32 des Käfigs 3, sowie dessen Käfigachse 30. Die Fenster 35 und die Kugeln 4 sind dabei vorzugsweise derartig ausgestaltet und aufeinander abgestimmt, dass die Kugeln 4 zumindest in axialer Richtung im Wesentlichen kein Spiel haben. Der Käfig 3 wird über die Käfigführungsflächen 13, 23 in axialer Richtung von der Innen- 1 bzw. der Außennabe 2 geführt. Die Achsen der Innennabe 10 und der Außennabe 20 fallen im zusammengebauten Zustand des Gelenks zusammen. Die Neigung der Käfigachse 30 zu den Achsen der Innennabe bzw. Außennabe ist dabei der Beugungswinkel des Gelenks, welcher durch die Konstruktion der Bestandteile und deren Abstimmung aufeinander einen maximalen Wert hat.

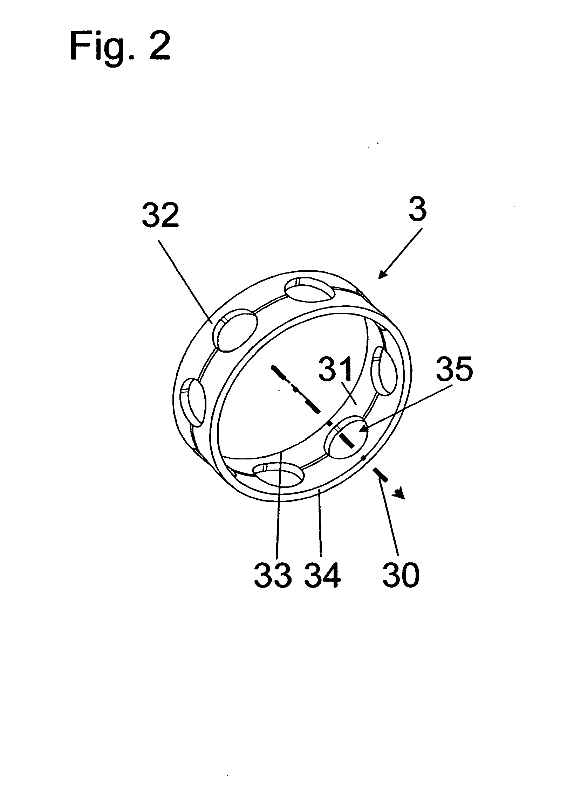

In der Fig. 2 ist ein Käfig 3 dargestellt, welcher im Wesentlichen ringförmig bzw. zylindrisch ausgestaltet ist. Die Innenfläche 31 und die Außenfläche 32 werden durch zwei Ränder 33, 34 begrenzt und bestehen abwechselnd aus in Richtung der Käfigachse 30 verlaufenden Längsabschnitten oder Längsstegen mit und ohne Fenster 35. Die Abschnitte mit Fenster 35 befinden sich beim fertig montierten Gelenk zwischen den Rillen der Innen- und der Außennabe und führen dort die Kugeln in den Laufbahnpaaren. Die jeweils daran angrenzenden Abschnitte ohne Fenster kommen in Kontakt mit den Käfigführungsflächen der beiden Naben. Zumindest die Längsbereiche weisen zwischen den Fenster 35, d.h. die Bereiche, welche durch die Käfigführungsflächen die Führung erfahren, jeweils eine in den Innenraum des Käfigs 3 weisende und somit den Innenraum verengende Struktur auf. In dieser Ausgestaltung ist die Innenfläche 31 rotationssymmetrisch ausgestaltet. Weiterhin nähert sich die Innenfläche 31 jeweils von beiden Rändern 33, 34 ausgehend der Käfigachse 30 an, d.h. der Innenraum des Käfigs 3 wird von beiden Seiten in Richtung der Mitte, welche insbesondere jeweils die Mitte der Fenster 35 bestimmt, enger. Die Außenfläche 32 ist in dieser Ausgestaltung nach außen geneigt. Auf der Innen- 31 bzw. der Außenseite 32 münden die Steigungen ausgehend von den beiden Rändern 33, 34 dabei nicht in einer Spitze, sondern wie hier angedeutet in einem abgeflachten Bereich.

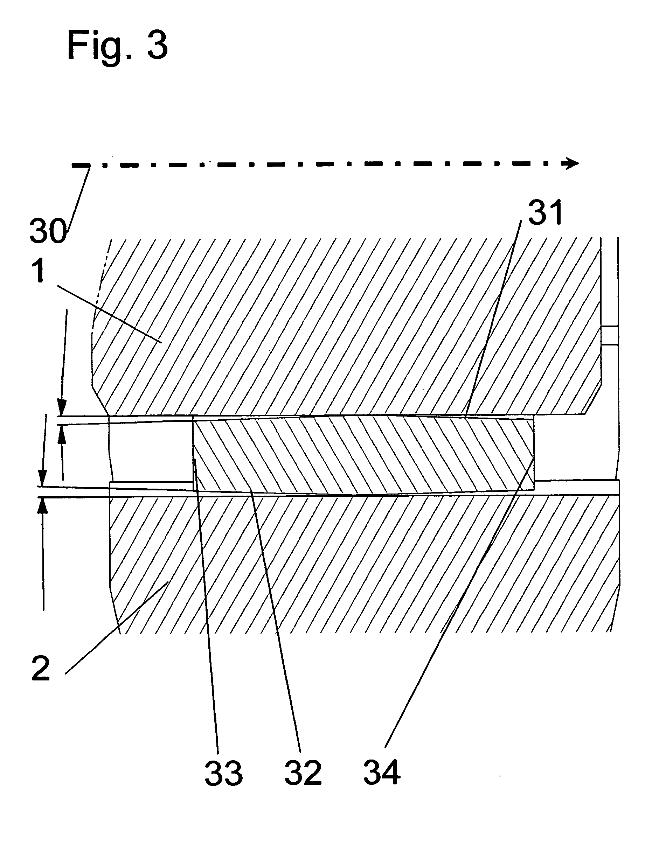

Die Fig. 3 zeigt einen Schnitt durch eine Seite des Kugelgelenks. Dargestellt ist die Käfigachse 30, die Innennabe 1, die Außennabe 2 und dazwischen der Käfig 3. Die Flächen 31, 32 des Käfigs 3 weisen hier Öffnungswinkel von 1° auf. Damit ist verbunden, dass das Gelenk eine Beugung von maximal 2° erzielt, d.h. der Öffnungswinkel entspricht dem halben Wert der maximalen Beugung des Gelenks. Gegenüber der Außennabe 2 verfügt der Käfig 3 überdies über einen kleinen Abstand. Die Käfigführungsflächen sind im Wesentlichen als gerade Zylindersegmente ausgestaltet. Die Innenfläche 31 bewegt sich dabei jeweils von den Rändern 33, 34 in Richtung der Käfigachse 30, und die Außenfläche 32 bewegt sich von dieser fort. Die Wandstärke des Käfigs 3 nimmt daher in dieser Ausgestaltung von den Rändern 33,34 nach innen und insbesondere bis zur Höhe der Mitte hin zu.

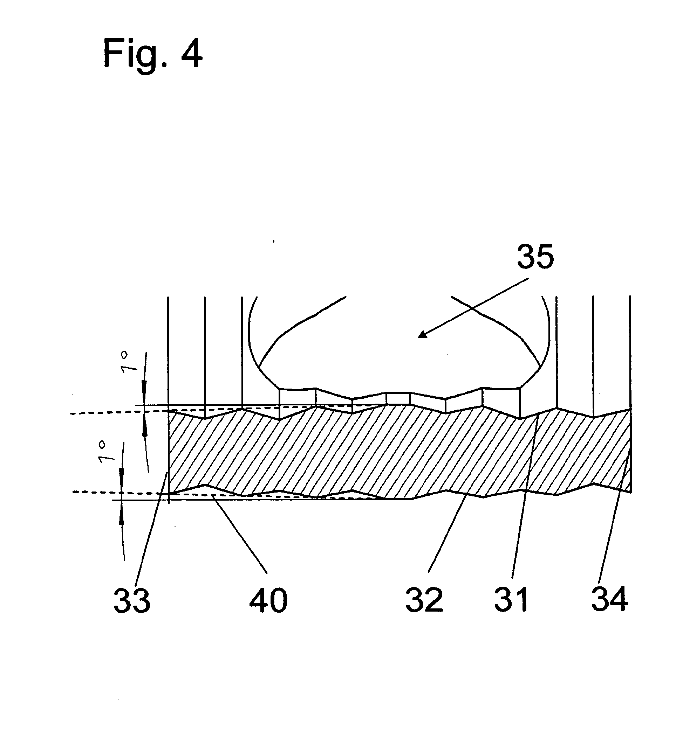

In der Fig. 4 wird ein Verlauf der Innen- 31 bzw. Außenfläche 32 gezeigt, welcher nicht erfindungsgemäß, nicht stetig, sondern abschnittsweise und hier zick-zack-förmig erfolgt. Die Einhüllende 40 bezieht sich dabei jeweils abschnittsweise auf die am weitesten nach außen ragenden Bereiche der jeweiligen Teil-Flächen. Der am weitesten hinein- bzw. hinausragende Bereich ist hier jeweils im Wesentlichen auf der Höhe der Mitte des Käfigs 3. Da die Innen- 31 bzw. Außenfläche 32 in Kontakt mit den Käfigführungsflächen kommen, kann durch den wie hier gezeigten nicht-geraden Verlauf die Kontaktfläche vermindert werden. In einer weiteren Ausgestaltung sind die Flächen dabei zumindest abschnittsweise geschwungen oder kugelförmig ausgestaltet. Die in der hier dargestellten Variante auftretenden "Täler" erlauben es beispielsweise auch, Schmiermittel aufzunehmen. Alternativ kann der Verlauf auch treppenförmig sein.

## Patentansprüche

1. Kugelgelenk,
mit einer Innennabe (1), die eine Innennabenachse (10) und eine Außenfläche (10) aufweist,
wobei in der Innennabe (1) Innenlaufrillen (12) und Käfigführungsflächen (13) angeordnet sind,
wobei mindestens eine Innenlaufrille (12) gerade und parallel zur Innennabenachse (10) verlaufend ausgestaltet ist,
mit einer Außennabe (2), die eine Außennabenachse (20) und eine Innenfläche (21) aufweist,
wobei in der Außennabe (1) Außenlaufrillen (22) und Käfigführungsflächen (23) angeordnet sind,
wobei mindestens eine Außenlaufrille (22) gerade und parallel zur Außennabenachse (20) verlaufend ausgestaltet ist,
wobei jeweils eine Innenlaufrille (12) einer Außenlaufrille (22) gegenüberliegt und mit dieser jeweils ein Laufrillenpaar bildet,
und
mit einem Käfig (3), welcher im Wesentlichen ringförmig ausgestaltet ist und eine Käfigachse (30), eine Innenfläche (31), eine Außenfläche (32) und zwei die Innenfläche (31) und die Außenfläche (32) begrenzende Ränder (33, 34) aufweist,
wobei die Außenfläche (32) des Käfigs (3) derartig ausgestaltet ist, dass die Außenfläche (32) und/oder eine Einhüllende der Außenfläche (32) sich ausgehend von je einem Rand (33, 34) kontinnierlich von der Richtung der Käfigachse (30) entfernt,
wobei der Käfig (3) zwischen der Innennabe (1) und der Außennabe (2) angeordnet ist,
wobei der Käfig (3) entsprechend der Anzahl der Laufrillenpaare Fenster (35) aufweist, in denen in die Innenlaufrillen (12) und Außenlaufrillen (22) eingreifende Kugeln (4) geführt sind,
und
wobei der Käfig (3) die Kugeln (4) in einer Ebene hält,
**dadurch gekennzeichnet,**
**dass** die Innenfläche (31) des Käfigs (3) derartig ausgestaltet ist, dass die Innenfläche (31) und/oder eine Einhüllende der Innenfläche (31) sich ausgehend von je einem Rand (33, 34) kontinnierlich in Richtung der Käfigachse (30) annähert,
und
**dass** die Fenster (35) und die darin geführten Kugeln (4) derartig ausgestaltet und aufeinander abgestimmt sind, dass die Kugeln (4) zumindest in Richtung der Käfigachse (30) frei von Spiel innerhalb des jeweiligen Fensters (35) sind.

2. Kugelgelenk nach Anspruch 1,
**dadurch gekennzeichnet,**
**dass** die Innenfläche (31) des Käfigs (3) und/oder die Einhüllende sich ausgehend von je einem Rand (33, 34) zumindest abschnittsweise mit einem ersten Öffnungswinkel und einem zweiten Öffnungswinkel in Richtung der Käfigachse (30) annähert, wobei der erste Öffnungswinkel und/oder der zweite Öffnungswinkel kleiner oder gleich 3°, vorzugsweise kleiner oder gleich 1° ist.

3. Kugelgelenk nach Anspruch 1 oder 2,
**dadurch gekennzeichnet,**
**dass** die Außenfläche (32) des Käfigs (3) und/oder die Einhüllende sich ausgehend von je einem Rand (33, 34) zumindest abschnittsweise mit einem ersten Öffnungswinkel und einem zweiten Öffnungswinkel von der Richtung der Käfigachse (30) entfernt, wobei der erste Öffnungswinkel und/oder der zweite Öffnungswinkel der Außenfläche (32) und/oder der Einhüllenden der Außenfläche (32) kleiner oder gleich 3°, vorzugsweise kleiner oder gleich 1°. ist.

4. Kugelgelenk nach einem der Ansprüche 1 bis 3,
**dadurch gekennzeichnet,**
**dass** es sich bei dem Kugelgelenk um ein längsverschiebliches Kugelgelenk oder um ein, insbesondere längsverschiebliches, Kugelgleichlaufdrehgelenk oder um ein Kugelgleichlauffestgelenk handelt.

## Claims

1. Ball joint,
with an inner hub (1) which has an inner hub axis (10) and an outer surface (10),
whereby inner running grooves (12) and cage guidance surfaces (13) are arranged in the inner hub (1),
whereby at least one inner running groove (12) is designed to run straight and parallel to the inner hub axis (10),
with an outer hub (2) which has an outer hub axis (20) and an inner surface (21),
whereby outer running grooves (22) and cage guidance surfaces (23) are arranged in the outer hub (1),
whereby at least one outer running groove (22) is designed to run straight and parallel to the outer hub axis (20),
whereby one inner running groove (12) is opposite to an outer running groove (22) in each case forming a pair with this groove,
and with a cage (3) which is basically designed in the form of a ring and has a cage axis (30), an inner surface (31), an outer surface (32) and where the inner surface (31) and the outer surface (32) have two limiting edges (33, 34),
whereby the outer surface (32) of the cage (3) is designed in such a way that the outer surface (32) and/or an envelope of the outer surface (32) continuously moves away from the direction of the cage axis (30), starting from one edge (33, 34) in each case,
whereby the cage (3) is arranged between the inner hub (1) and the outer hub (2),
whereby the cage (3) has windows (35) according to the number of pairs of grooves in which engaging balls (4) are guided in the inner running grooves (12) and outer running grooves (22),
and whereby the cage (3) keeps the balls (4) in one plane,
**characterised by** the inner surface (31) of the cage (3) being designed in such a way that the inner surface (31) and/or an envelope of the inner surface (31) continuously moves towards the direction of the cage axis (30) starting from one edge (33, 34) in each case,
and that the windows (35) and the balls guided within (4) are designed in such a way and aligned so that the balls (4) are free of play within the respective window (35), at least in direction of the cage axis (30).

2. Ball joint in accordance with claim 1, **characterised by** the inner surface (31) of the cage (3) and/or the envelope, starting from one edge (33, 34) in each case, at least sectionally approaching the direction of the cage axis (30) with a first aperture angle and a second aperture angle, whereby the first aperture angle and/or the second aperture angle is less than or equal to 3°, preferably less than or equal to 1°.

3. Ball joint in accordance with claim 1 or 2, **characterised by** the outer surface (32) of the cage (3) and/or the envelope, starting from one edge (33, 34) in each case, at least sectionally away from the direction of the cage axis (30) with a first aperture angle and a second aperture angle, whereby the first aperture angle and/or the second aperture angle of the outer surface (32) and/or the envelope of the outer surface (32) is less than or equal to 3°, preferably less than or equal to 1°.

4. Ball joint in accordance with one of the claims 1 to 3, **characterised by** the ball joint being a longitudinally movable ball joint or, especially, a longitudinally movable constant velocity ball joint or a fixed constant velocity ball joint.

## Revendications

1. Joint à rotule,
avec un moyeu intérieur (1), qui présente un axe de moyeu intérieur (10) et une surface extérieure (10),
sachant que des gorges de roulement intérieures (12) et des surfaces de guidage de cage (13) sont disposées dans le moyeu intérieur (1),
sachant qu'au moins une gorge de roulement intérieure (12) est réalisée en s'étendant en ligne droite et parallèlement à l'axe de moyeu intérieur (10),
avec un moyeu extérieur (2), qui présente un axe de moyeu extérieur (20) et une surface intérieure (21),
sachant que des gorges de roulement extérieures (22) et des surfaces de guidage de cage (23) sont disposées dans le moyeu extérieur (2),
sachant qu'au moins une gorge de roulement extérieure (22) est réalisée en s'étendant en ligne droite et parallèlement à l'axe de moyeu extérieur (20),
sachant qu'une gorge de roulement intérieure (12) fait chaque fois face à une gorge de roulement extérieure (22) et forme avec celle-ci une paire respective de gorges de roulement,
et avec une cage (3) qui est réalisée essentiellement annulaire et qui présente un axe de cage (30), une surface intérieure (31), une surface extérieure (32) et deux bords (33, 34) délimitant la surface intérieure (31) et la surface extérieure (32),
sachant que la surface extérieure (32) de la cage (3) est configurée de telle sorte que la surface extérieure (32) et/ou une enveloppante de la surface extérieure (32) s'éloigne continûment, en partant d'un bord respectif (33, 34), de la direction de l'axe (30) de la cage,
sachant que la cage (3) est disposée entre le moyeu intérieur (1) et le moyeu extérieur (2),
sachant que la cage (3) présente des fenêtres (35) dans un nombre correspondant au nombre de paires de gorges de roulement et dans lesquelles sont guidées des billes (4) s'engageant dans les gorges de roulement intérieures (12) et les gorges de roulement extérieures (22),
et sachant que la cage (3) maintient les billes (4) dans un plan,
**caractérisé en ce que** la surface intérieure (31) de la cage (3) est configurée de telle sorte que la surface intérieure (31) et/ou une enveloppante de la surface intérieure (31) se rapproche continûment, en partant d'un bord respectif (33, 34), en direction de l'axe (30) de la cage,
et **en ce que** les fenêtres (35) et les billes (4) dirigées dans celles-ci sont configurées de telle sorte et mutuellement adaptées de telle sorte que les billes (4) sont, au moins dans la direction de l'axe (30) de la cage, exemptes de jeu à l'intérieur de la fenêtre respective (35).

2. Joint à rotule selon la revendication 1, **caractérisé en ce que** la surface intérieure (31) de la cage (3) et/ou l'enveloppante se rapproche, en partant d'un bord respectif (33, 34), au moins sectoriellement avec un premier angle d'ouverture et un deuxième angle d'ouverture en direction de l'axe (30) de la cage, sachant que le premier angle d'ouverture et/ou le deuxième angle d'ouverture est inférieur ou égal à 3°, de préférence inférieur ou égal à 1°.

3. Joint à rotule selon la revendication 1 ou 2, **caractérisé en ce que** la surface extérieure (32) de la cage (3) et/ou l'enveloppante s'éloigne, en partant d'un bord respectif (33, 34), au moins sectoriellement avec un premier angle d'ouverture et un deuxième angle d'ouverture de la direction de l'axe (30) de la cage, sachant que le premier angle d'ouverture et/ou le deuxième angle d'ouverture de la surface extérieure (32) et/ou de l'enveloppante de la surface extérieure (32) est inférieur ou égal à 3°, de préférence inférieur ou égal à 1°.

4. Joint à rotule selon l'une des revendications 1 à 3, **caractérisé en ce que** le joint à rotule est un joint à rotule à déplacement longitudinal, ou un joint tournant homocinétique à rotule, en particulier à déplacement longitudinal, ou un joint fixe homocinétique à rotule.
